# EUROPEAN PATENT SPECIFICATION

(11) **EP 0 539 476 B1**
(45) Date of publication and mention of the grant of the patent: **08.10.1997**
(21) Application number: 91913537.6
(22) Date of filing: 17.07.1991
(51) Int. Cl.: C04B 35/52, C04B 35/64, F16D 69/02

(54) **CARBON-CARBON COMPOSITE MATERIAL**
KOHLENSTOFF-KOHLENSTOFF VERBUNDMATERIAL
MATERIAU COMPOSITE CARBONE-CARBONE

(30) Priority: 19.07.1990 GB 9015857
(43) Date of publication of application: 05.05.1993
(73) Proprietor: DUNLOP LIMITED, London SW1P 2PL (GB)
(72) Inventor: FISHER, Ronald 19 Bowen Road, Warwickshire CV22 5LF (GB); FENNELL, Thomas, Gerard 5 Bracadale Close, Warwickshire CV3 2PF (GB); TIBBATTS, Alan, Frank 7 Woodclose Avenue, Warwickshire CV6 1HA (GB)
(74) Representative: Sparrow, Alvar Alfred
(86) International application number: GB9101187
(87) International publication number: WO9201648

(56) References cited:
- DE-C- 3 726 106
- US-A- 3 917 884
- US-A- 3 943 213
- US-A- 4 409 048

## Description

This invention relates to a method for the manufacture of brake friction discs of carbon-carbon composite material, especially for aircraft, and to such discs of the composite material made by the method of the invention.

The established techniques for manufacture of carbon-carbon composite material for use in such products as friction discs for aircraft brakes involve long time scales whether the carbon-carbon composite material is formed by a technique involving the charring of a curable organic material such as a thermosetting phenolic resin or pitch or by a chemical vapour infiltration technique. In consequence, cost of the resulting material is high.

The present invention seeks to provide a method for the manufacture of brake friction discs of carbon-carbon composite material which is less expensive and/or less time consuming.

In accordance with the present invention there is provided a method for the manufacture of a brake friction disc of carbon-carbon composite material, which comprises providing a combination of carbonisable polymeric material and carbon fibres and carbonising the polymeric material, characterised in that:
the polymeric material employed in the combination is thermoplastic (i e non-curing, non-thermosetting) material and is of a kind which yields greater than 60% by weight of carbon when heated to a temperature of at least 600°C at normal atmospheric pressure;
the combination is located in a heating enclosure providing a non-oxidising environment and is heated in the enclosure to a temperature of at least 600°C whilst the combination is subjected to the action of press means applying a substantially uniaxial compressive mechanical load to consolidate the combination whilst in a softened plastic condition; the said temperature is maintained substantially constant whilst the combination is subjected to uniaxial mechanical compression in the enclosure for a time which is sufficient to consolidate the combination whilst in a softened plastic condition and to carbonise the thermoplastic material substantially completely, and to densify the combination at least during the carbonising process;
   whereby, after cooling, the resultant product is a brake friction disc of carbon-carbon composite material without treatment with further carbonisable material and carbonisation of such further material.

The press means may be in the form of a membrane, e g a flexible membrane, acted upon by fluid pressure but which applies a compressive force only to a surface of said combination and prevents the fluid entering any interstices within the combination. More preferably, however, the press means comprises a rigid member, such as a press platen.

Restraining means may or may not be provided to restrain outwards deformation of surface regions of the combination not acted upon directly by the press means.

The method comprises application of a uniaxial compressive mechanical load for substantially the whole of the time for which the combination is subject to said temperature of at least 600°C. It is envisaged that whilst being heated up to and maintained at an elevated temperature the press means will be operated upon to enable it to move thereby to accommodate any shrinkage of the overall external volume of the combination and/or to consolidate the combination in its softened condition.

Means may be provided to maintain substantially atmospheric pressure in the enclosure and vent means may be provided to ensure that gases evolved during carbonisation do not cause an undesirable increase of gas pressure. Alternatively the by-products of carbonising may be removed, for example by a vacuum system.

Suitable polymeric materials for acting as precursors to produce a carbon matrix around the carbon fibres must all be thermoplastic and of the high char yield type, i e of a type which is capable of yielding by weight of carbon greater than 60% of its original weight when heated to a temperature of at least 600°C. These materials include thermoplastic pitches (including pitch solutions) and other thermoplastic polymers and mixes thereof. Examples of particularly suitable materials are mesophase pitches or green cokes which are pitches processed to a stage just before carbonisation. Whilst pitches are normally products of coal and petroleum industries it is to be understood that suitable pitches may be synthesised from organic materials and this invention includes the use of synthesised pitches.

The thermoplastic material selected to be of a kind which yields by weight of carbon greater than 60% of its initial weight when heated to at least 600°C, which may be referred to as a high char yield material, preferably yields at least 70% and more preferably 80% or more by weight of carbon when so heated.

The carbon fibres can be of any of the kinds well known to those skilled in the art of forming carbon-carbon composite materials for brake friction discs. Examples of suitable precursor materials for the carbon fibres include polyacrylonitrile, pitch and rayon.

The carbon fibres may be discrete staple length fibres or may be of a relatively long length substantially continuous filamentary form. Particularly when of a filamentary form they may be formed into a fabric such as a woven fabric. Alternatively fibres of staple and/or filamentary form may be formed into a non-woven fabric by other techniques, e g by needle punching. The carbon fibres typically have a length greater than 10 mm and preferably greater than 25 mm.

The initial combination of thermoplastic polymeric material and carbon fibres for subjecting to compression under elevated temperature conditions may be formed by, for example, conventional techniques familiar to those skilled in the manufacture of composite materials. These techniques include, for example, the dipping of carbon fibres into molten pitch, impregnating a fabric of fibres with a solution of the pitch, adding pitch in the form of a powder to a layer of fibres, film stacking techniques in which layers of carbon fibre material are alternated with layers of plastics, and combinations thereof. These techniques can be applied also to the use of thermoplastic polymeric materials other than pitch. The initial combination of thermoplastic polymeric material and carbon fibres may also be in the form of a moulding compound.

Although the temperature used to carbonise the thermoplastic polymeric material should be at least 600°C it is envisaged that normally it will not exceed 3000°C above which carbon materials start to vaporise.

The combination of thermoplastic polymeric material and carbon fibres preferably is one in which the carbon fibres are distributed uniformly within the polymeric material. More preferably the combination is substantially devoid of interstices. The fibres, whether or not uniformly distributed, may be provided in a random orientation or may be preferentially oriented if the resulting material is required to have particular properties in one or more preferential directions.

Shaping into a friction disc shape may be produced in a mould during or subsequent to the process of combining the thermoplastic polymeric material and carbon fibres. Typically the shape-moulding stage of the combination is reached on heating to about 300°C. The heating is then continued to a higher temperature, in the same enclosure, suitably a furnace, to carbonise the material.

The method of the present invention can be expected to enable carbon-carbon composite annular friction discs for aircraft brakes to be manufactured in a matter of days rather than weeks or months. Accordingly substantial cost benefits arise particularly in respect of utilisation of expensive furnace equipment.

## Claims

1. Method for the manufacture of a brake friction disc of carbon-carbon composite material, which comprises providing a combination of carbonisable polymeric material and carbon fibres and carbonising the polymeric material,
characterised in that:
the polymeric material employed in the combination is thermoplastic material and is of a kind which yields greater than 60% by weight of carbon when heated to a temperature of at least 600°C at normal atmospheric pressure;
the combination is located in a heating enclosure providing a non-oxidising environment and is heated in the enclosure to a temperature of at least 600°C whilst the combination is subjected to the action of press means applying a substantially uniaxial compressive mechanical load to consolidate the combination whilst in a softened plastic condition;
the said temperature is maintained substantially constant whilst the combination is subjected to uniaxial mechanical compression in the enclosure for a time which is sufficient to consolidate the combination whilst in a softened plastic condition and to carbonise the thermoplastic material substantially completely and to densify the combination at least during the carbonising process;
whereby, after cooling, the resultant product is a brake friction disc of carbon-carbon composite material without treatment with further carbonisable material and carbonisation of such further material.

2. Method according to Claim 1 wherein restraining means is provided to restrain outwards deformation of surface regions of the combination not acted upon by the press means.

3. Method according to Claim 1 wherein surface regions of the combination not acted upon by the press means are free from restraint against outwards deformation.

4. Method according to any one of the preceding Claims wherein the thermoplastic material is a pitch.

5. Method according to Claim 4 wherein said pitch is a mesophase pitch.

6. Method according to any of the preceding Claims wherein the thermoplastic material is of a kind which yields by weight of carbon greater than 70% of its initial weight when carbonised.

7. Method according to Claim 6 wherein the thermoplastic material yields by weight of carbon at least 80% of its initial weight when carbonised.

8. Method according to any of the preceding Claims wherein the combination is formed by adding the thermoplastic material in powdered form to one or more layers of carbon fibre.

9. Method according to any of Claims 1 to 7 wherein the initial combination of thermoplastic material and carbon fibres is in the form of a moulding compound.

10. Method according to any of the preceding Claims wherein said carbon fibres have a length of at least 10 mm.

## Patentansprüche

1. Verfahren zur Herstellung einer Bremsreibscheibe aus Kohlenstoff-Kohlenstoffverbundmaterial, das das Vorsehen einer Kombination aus karbonisierbarem Polymermaterial und Kohlefasern und das Karbonisieren des Polymermaterials aufweist,
dadurch **gekennzeichnet,** daß:
das in der Kombination angewendete Polymermaterial thermoplastisches Material ist und von einer Art ist, die, wenn auf eine Temperatur von zumindest 600°C bei normalem atmosphärischem Druck erhitzt, mehr als 60 Gewichts-% Kohlenstoff ergibt;
die Kombination in einer eine nicht oxidierende Umgebung vorsehende Heizanlage angeordnet wird und in der Anlage auf eine Temperatur von zumindest 600°C erhitzt wird, während die Kombination der Wirkung von Preßmitteln ausgesetzt wird, die eine im wesentlichen einachsige mechanische Druckbelastung anwenden, um die Kombination zu verfestigen, während sie in einem erweichten nachgiebigen Zustand ist;
die Temperatur im wesentlichen konstant gehalten wird, während die Kombination dem einachsigen mechanischen Druck in der Anlage für eine Zeit ausgesetzt wird, die ausreichend ist, die Kombination, während sie in einem erweichten nachgiebigen Zustand ist, zu verfestigen und das thermoplastische Material im wesentlichen vollständig zu karbonisieren und die Kombination zumindest während des Karbonisierungsprozesses zu verfestigen;
wobei nach dem Abkühlen das resultierende Produkt eine Bremsreibscheibe aus Kohlenstoff-Kohlenstoffverbundmaterial, ohne Behandlung mit weiterem karbonisierbarem Material und Karbonisierung eines solchen weiteren Materials, ist.

2. Verfahren nach Anspruch 1,
dadurch gekennzeichnet, daß ein Zurückhaltemittel vorgesehen ist, um Auswärtsverformung von Oberflächenbereichen der Kombination zu verhindern, auf die nicht durch die Preßmittel eingewirkt wird.

3. Verfahren nach Anspruch 1,
dadurch gekennzeichnet, daß Oberflächenbereichen der Kombination, auf die nicht durch die Preßmittel eingewirkt wird, frei von Zurückhalten gegen Auswärtsverformung sind.

4. Verfahren nach einem der vorhergehenden Ansprüche,
dadurch gekennzeichnet, daß das thermoplastische Material ein Pech ist.

5. Verfahren nach Anspruch 4,
dadurch gekennzeichnet, daß das Pech ein Mesophasen-Pech ist.

6. Verfahren nach einem der vorhergehenden Ansprüche,
dadurch gekennzeichnet, daß das thermoplastische Material von einer Art ist, die ein Kohlenstoffgewicht größer als 70% seines Anfangsgewichtes ergibt, wenn es karbonisiert wird.

7. Verfahren nach Anspruch 6,
dadurch gekennzeichnet, daß das thermoplastische Material ein Kohlenstoffgewicht von zumindest 80% seines Anfangsgewichts ergibt, wenn es karbonisiert wird.

8. Verfahren nach einem der vorhergehenden Ansprüche,
dadurch gekennzeichnet, daß die Kombination durch Hinzufügen des thermoplastischen Materials in Pulverform zu einer oder mehreren Lagen von Kohlefasern gebildet wird.

9. Verfahren nach einem der Ansprüche 1 bis 7,
dadurch gekennzeichnet, daß die Anfangskombination aus thermoplastischem Material und Kohlefasern die Form einer geschmolzenen Preßmasse hat.

10. Verfahren nach einem der vorhergehenden Ansprüche,
dadurch gekennzeichnet, daß die Kohlefasern eine Länge von zumindest 10 mm haben.

## Revendications

1. Procédé de fabrication d'un disque de friction de frein, en un matériau composite carbone-carbone, qui comprend la mise à disposition d'une combinaison d'un matériau polymère carbonisable et de fibres de carbone et la carbonisation du matériau polymère, caractérisé en ce que :
le matériau polymère utilisé dans la combinaison est un matériau thermoplastique et est d'un type qui donne plus de 60 % en poids de carbone quand il est chauffé à une température d'au moins 600°C sous la pression atmosphérique normale ;
la combinaison est disposée dans une enceinte de chauffage, qui réalise un environnement non oxydant, et est chauffée dans l'enceinte à une température d'au moins 600°C, tandis que la combinaison est soumise à l'action d'un moyen de compression, qui applique une charge mécanique de compression essentiellement uniaxe pour consolider la combinaison quand elle se trouve dans un état plastique ramolli ;
ladite température est maintenue sensiblement constante alors que la combinaison est soumise à la compression mécanique uniaxe dans l'enceinte, pendant un laps de temps qui est suffisant pour consolider la combinaison quand elle se trouve dans un état plastique ramolli et pour carboniser le matériau thermoplastique pratiquement complètement, et pour densifier la combinaison au moins pendant l'opération de carbonisation ;
de telle sorte que, après refroidissement, le produit obtenu soit un disque de friction de frein en un matériau composite carbone-carbone, sans traitement avec un autre matériau carbonisable, ni carbonisation de cet autre matériau.

2. Procédé selon la revendication 1, dans lequel un moyen de contrainte est prévu pour s'opposer à la déformation vers l'extérieur de régions superficielles de la combinaison sur lesquelles n'agit pas le moyen de compression.

3. Procédé selon la revendication 1, dans lequel des régions superficielles de la combinaison sur lesquelles n'agit pas le moyen de compression sont exemptes de contrainte vis-à-vis d'une déformation vers l'extérieur.

4. Procédé selon l'une quelconque des revendications précédentes, dans lequel le matériau thermoplastique est un brai.

5. Procédé selon la revendication 4, dans lequel ledit brai est un brai mésophasique.

6. Procédé selon l'une quelconque des revendications précédentes, dans lequel le matériau thermoplastique est d'un type qui donne, par carbonisation, plus de 70 % en poids de carbone par rapport à son poids initial.

7. Procédé selon la revendication 6, dans lequel le matériau thermoplastique donne, par carbonisation, au moins 80 % en poids de carbone par rapport à son poids initial.

8. Procédé selon l'une quelconque des revendications précédentes, dans lequel la combinaison est obtenue par addition du matériau thermoplastique, sous forme de poudre, à une ou plusieurs couches de fibres de carbone.

9. Procédé selon l'une quelconque des revendications 1 à 7, dans lequel la combinaison initiale d'un matériau thermoplastique et de fibres de carbone se présente sous forme d'un mélange à mouler.

10. Procédé selon l'une quelconque des revendications précédentes, dans lequel lesdites fibres de carbone ont une longueur d'au moins 10 mm.
